(19) **Europäisches Patentamt European Patent Office Office européen des brevets**

(11) **EP 3 517 354 B1**

(12) **EUROPEAN PATENT SPECIFICATION**

(45) Date of publication and mention of the grant of the patent:
**08.07.2020 Bulletin 2020/28**

(51) Int Cl.:
**B60N 2/02** *(2006.01)*  **B60N 3/00** *(2006.01)*
**G05D 1/08** *(2006.01)*

(21) Application number: **18153873.7**

(22) Date of filing: **29.01.2018**

(54) **A METHOD AND AN APPARATUS FOR COMPENSATING ACCELERATION FORCES OF OBJECTS ON A SURFACE AND A VEHICLE COMPRISING THE APPARATUS**

VERFAHREN UND VORRICHTUNG ZUR KOMPENSATION VON BESCHLEUNIGUNGSKRÄFTEN VON OBJEKTEN AUF EINER OBERFLÄCHE UND EIN FAHRZEUG MIT DER VORRICHTUNG

PROCÉDÉ ET APPAREIL DE COMPENSATION DES FORCES D'ACCÉLÉRATION D'OBJETS SUR UNE SURFACE ET VÉHICULE COMPRENANT LEDIT APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.07.2019 Bulletin 2019/31**

(73) Proprietor: **Bayerische Motoren Werke Aktiengesellschaft 80809 München (DE)**

(72) Inventors:
• **Yamashita, Yusaku**
  **Kamakura, Kanagawa, 2480015 (JP)**
• **Hofmann, Marc**
  **Tokyo, 105-0014 (JP)**

(56) References cited:
**EP-A1- 2 431 218**      **WO-A1-2010/056193**
**US-A1- 2010 057 319**    **US-A1- 2013 131 923**

**Description**

Embodiments relate to a method and an apparatus for compensating acceleration forces of objects on a surface and a vehicle comprising the apparatus.

While driving with a vehicle lateral and longitudinal accelerations or forces resulting from accelerations of the vehicle can affect items or objects a passenger or driver has brought into the vehicle, for example phones, wallets, cups, laptops or the like. As a result objects, which are not stored safely, can start moving around in the vehicle with the risk of distracting the driver or hurting passengers. Therefore, safe storage compartments are optimized for specific items, e.g. a cup holder for a cup.

However, with autonomous driving and new interior concepts of vehicles the passenger is supposed to use a broader variety of objects in a vehicle, for example in a car as concentrating on traffic or driving is not required. For instance, passengers are supposed to bring the same kind of objects into the vehicle which are used at home e.g. computers, books, food plates, keys, wallets, cell phones, beverages or the like. Most storage solutions in vehicles are not suitable to store these kinds of items safely during use. Document DE 295 04 741 U1 describes a table configured for use in a vehicle. This table is suitable to hold a laptop, but does not seem to prevent the laptop from displacement or falling down from the table as a result of accelerations of the vehicle.

Especially, if the driver or a passenger is drinking inside the vehicle, a container with the beverage should be covered or capped in order not to be spilled or to drop the contents. This problem may apply to a variety of different objects.

Thus, some storage compartments or solutions are either not safe with regard to massive accelerations or forces resulting from accelerations, or not flexible enough to store a variety of different objects. That might lead to a conflict of objectives between safety and flexibility of storage compartments.

WO 2010/056193 A1 discloses a transportation apparatus, comprising a payload receiving unit, a transportation body, and a compensation system arranged there between and devised to allow adjustment of a desired spatial relationship between a payload surface of said compensation unit for attachment of a payload to said a transportation surface.

It is, therefore, desired to provide a concept for an improved storage solution for objects in vehicles.

This demand may be satisfied by a method and an apparatus for compensating acceleration forces of objects on a surface and a vehicle according to any of the independent claims. Preferred embodiments are given in the dependent claims.

A method for compensating acceleration forces of objects on a surface according to an embodiment comprises receiving information related to an acceleration on the surface and moving the surface to at least partly compensate the acceleration.

An apparatus for compensating acceleration forces of objects on a surface according to an embodiment comprises an interface configured to receive information related to an acceleration on the surface and at least one actuator configured to control a movement of the surface. Further, the apparatus comprises a control circuit coupled to the sensor and the at least one actuator. The control circuit is configured to move the surface to at least partly compensate the acceleration using the at least one actuator based on the information related to an acceleration on the surface.

Using the method or the apparatus according to an embodiment may allow storing or keeping an object on a surface, which can be affected by accelerations, and preventing the object from falling down from the surface, by at least partly compensating the acceleration by moving the surface. Moreover, some embodiments also provide the possibility to store or hold a variety of items or objects having different forms and sizes as the surface is not limited to storing specific objects. Moving the surface to at least partly compensate the acceleration may comprise a moving that prevents an object located on the surface from falling down due to acceleration or acceleration forces affecting the surface and the object. Acceleration forces may be forces resulting from acceleration. This effect may be achieved by movement and/or a combination of movement and friction forces between the object and the surface.

Additionally in some embodiments sensing information related to the acceleration on the surface and moving the surface to at least partly compensate the acceleration comprises sensing information related to a direction and a magnitude of the acceleration and moving the surface based on the information related to the direction and the magnitude of the surface. By moving the surface based on the information related to the direction and the magnitude of the surface some embodiments may allow defining and or carrying out the smallest movement of the surface that still prevents the object from falling off the surface. In other words the movement may generate a counter-acceleration that at least partly, in some embodiments even completely, compensates the acceleration force.

Additionally or alternatively, moving the surface to at least partly compensate the acceleration comprises tilting the surface. By tilting the surface the object may be prevented from falling down the surface effectively by carrying out a movement with minimum or reduced space requirements. Carrying out a movement with minimum or reduced space requirements may provide a convenient solution for a passenger, using the surface as table.

In some embodiments the surface may be any device that is configured to hold an object and that may be moved or tilted by an actuator. The surface may be made of or comprise any material like plastic, metal, wood and/or combinations thereof. Further, the surface may comprise any form, rectangular, circular, etc. For example the surface may be a tabletop, having a plane surface without any recesses, comprising at least one recess, a rim and/or the like. A size of the surface may be limited. The surface may for example comprise a maximum side length or cross section dimension of 1m, 0.8m or 0.5m.

An object stored on the surface may be any object a passenger uses on the surface, in a vehicle or a car like, a laptop, a tablet, a container for food or beverages, a book, a newspaper a magazine, a mobile phone, a wallet, a key, a suitcase or the like. A weight of the object may be limited to a maximum of 8kg, 5kg, 2kg, 1kg or the like. An object stored or located on the surface may freely move on the surface if affected by outer forces when the surface is not moved to at least partly compensate acceleration. This means the object might not be coupled or connected to the surface positively or firmly bonded. Of course, if needed or in some embodiments more than one object may be stored on the surface.

The tilting or the moving may be carried out by the actuator or any other device being able to move or tilt the surface to prevent the object from falling down the surface. The actuator may be any device being able to carry out a liner movement and/or rotational movement along an axis, to tilt or move the surface, like an electrically, pneumatically or hydraulically driven actuator, for example in form of a motor, an electromotor, a swivel motor or the like. While no accelerating occurs or is sensed, the actuator may be configured to place the surface in a neutral position, for example, arranged horizontally or in any other position.

In some embodiments moving the table only comprises tilting the surface along an axis without carrying out any linear movement of the surface with the actuator. Additionally or alternatively, the axis along which the tilting is carried out is arranged vertical to a direction of the acceleration and/or a direction of a force resulting from the acceleration affecting the surface and or the object on the surface. A direction of the acceleration may be parallel to a direction in which the vehicle with the surface is moving or vertical to this direction.

Additionally, in some embodiments the method comprises determining an angle $\alpha$ by which the surface is tilted along an axis. To determine the angle $\alpha$ the formula

$$\alpha = \arctan (acceleration/ \, gravitational \, constant)$$

may be applied. This may allow determining the tilting movement to compensate acceleration effectively. Determining the angle may be carried out by the control circuit of the apparatus or any controller or control device coupled with the actuator.

Sensing information may comprise receiving any information related to an acceleration affecting the surface. Any information may be received by the interface of the apparatus. The interface may be any means configured to receive the information. The information can be carried on a signal. Information carrying signals or information comprising signals can be sent, provided or interchanged, for instance, using electrical, optical, magnetic or radio signals. The signals can be in terms of their values and their timely sequence independent from one another be discrete or continuous. For instance, the signals may be analogue or digital signals. The interface may be configured to receive any of these signals.

The acceleration on the surface or an acceleration affecting the surface may result from an acceleration of a vehicle in or on which the surface is arranged. Manoeuvres like slowing down, speeding up the vehicle or/and changing direction of the vehicle may result in acceleration affecting the surface. In some embodiments the information related to the acceleration on the surface may be received from an acceleration sensor, which is configured to directly or indirectly measure an acceleration affecting the surface. This may allow determining the acceleration affecting the surface or force affecting the object due to acceleration with high enough accuracy and react to the measured acceleration by a movement sufficient to at least partly compensate the acceleration. An acceleration sensor can be any sensor providing information related to an acceleration of an object, for example a vehicle, the surface or the object. For instance, an acceleration sensor configured to directly measure acceleration may be configured to measure forces resulting from acceleration, for example a vibration sensor or a piezoelectric sensor. A sensor configured to indirectly measure acceleration may be configured to measure change in velocity and/or direction. The acceleration sensor may be arranged in the same vehicle comprising the surface. Data or information provided form the acceleration sensor may in some embodiments be used in other applications, for example in driving assistance systems or the like.

Additionally or alternatively in some embodiments the information related to the acceleration on the surface is received from a control device, which is configured to control a vehicle for autonomous driving. The surface may be arranged in the vehicle that is controlled for autonomous driving with the control device. This may allow moving or tilting the surface in accordance to autonomous driving instructions.

The control device may additionally be configured to predict the information related to the acceleration on the surface based on autonomous driving instructions and wherein the information related to the acceleration on the surface is related to a future acceleration that will be affecting the surface. By reacting to a future acceleration that will be affecting

3

the surface, the surface may be moved or tilted, when or even in advance, before the acceleration occurs. This may allow anticipating acceleration that will affect the surface and not only reacting to measured acceleration that is already affecting the surface. Moving the surface based on the information received from the control device may be carried out within at least 10ms, 8ms, 5ms, 2ms, 1ms, 0.5 ms, 0.2ms, 0.1ms, 0.05ms or 0.01ms after receiving the information from the control device. In some embodiments information received from the acceleration sensor related to a directly or indirectly measured acceleration and information related to autonomous driving instruction are used in combination in order to improve the compensation of the acceleration. In a first step the surface may be moved in accordance to the information received from the control device. In a further step the predicted information related to the acceleration may be reviewed and if necessary corrected with regard to the information received from the acceleration sensor which relates to acceleration actually affecting the surface. In other embodiments of course moving the surface is carried out either based on the information received from the acceleration sensor or received from the control device.

Additionally or alternatively in some embodiments information related to a movement of an object on the surface is received from a movement sensor. The movement sensor is configured to sense movement of at least one object located on the surface. This may allow verifying, if the acceleration affecting the surface and or the object leads to a movement of the object on the surface, which has to be prevented by moving the surface. The information related to a movement of an object may be understood as an additional information related to an acceleration on the surface, which provides information if the acceleration affecting the surface leads to a movement of the at least one object on the surface or if there is even an object located on the surface, which needs to be prevented from falling down the surface. The movement sensor can be any sensor configured to provide information related to a movement of an object on the surface. The information related to a movement of an object on the surface may comprise information if there is an object on the surface, if the object carries out any movement, which kind of movement the object carries out, for example direction and/or magnitude of the movement or the like. The movement sensor may be or comprise an optical sensor, for example a camera, an ultrasonic sensor or the like.

Moving the surface to at least partly compensate the acceleration may be carried out additionally based on sensing movements of the at least one object located on the surface by the movement sensor in some embodiments. This may allow reducing unnecessary moving of the surface indicated by information related to acceleration, which due to friction forces or because no object is located on the surface does not result in an unwanted movement of the object on the surface. This means in some embodiments moving of the surface takes place based on sensing information related to acceleration and receiving information related to a movement of the object on the surface. The actuator and/or the control circuit may be configured to carry out moving of the surface, only if the object moves. For instance, moving or tilting the surface is not needed, when movement of the object is prevented by friction. Thus a calmer and more comfortable surface or table with the surface may be provided and movements or unnecessary movements of the surface may be reduced. To enforce this effect the surface may comprise a surface high in friction. In some embodiments, the movement of the surface may be carried out only based on the information related to a movement of an object on the surface without considering the information related to the acceleration. Embodiments also refer to a computer program having a program code for performing the method to at least one of the embodiments described herein, when the computer program is executed on a computer or processor. Steps, operations or processes of various above-described methods may be performed by programmed computers or processors. Examples may also cover program storage devices such as digital data storage media, which are machine, processor or computer read-able and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods. Functions of various elements may be implemented in the form of dedicated hardware, such as "a signal generator", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The apparatus for compensating acceleration forces of objects on a surface may comprise additionally or alternatively to the interface the acceleration sensor configured to sense the accelerations. In this embodiment the control circuit is coupled to the sensor and the at least one actuator, wherein the control circuit is configured to move the surface using the at least one actuator based on acceleration information sensed using the sensor. The control circuit may be implemented as any of the processor, controller or hardware capable of executing the computer programs described herein.

Electrical, electronical and other components can be coupled to one another directly or indirectly in such a way that information carrying or informing comprising signals can be interchanged or sent from one component to the other component. Moreover, electrical and other components can be electrically coupled directly or indirectly to provide them with electrical energy, for instance, by providing a supply voltage and a supply current to the respective components.

Embodiments also provide a table comprising the apparatus according to one of the embodiments. The surface than may be implemented as a tabletop. Embodiments also provide a vehicle comprising the apparatus or the table according to embodiments. The information related to the acceleration may relate to the acceleration of the vehicle. The vehicle may be any vehicle, for example a car. The vehicle may be configured for autonomous driving and comprise a control device being configured to provide autonomous driving instructions which enable the vehicle for driving without a human driver.

In the following, embodiments will be described and explained in more detail with reference to the enclosed Figures.

Fig. 1a to 1c show different simplified side views of a surface movable by a method and an apparatus according to an embodiment;

Fig. 2 shows a simplified flowchart of a method for compensating acceleration forces of objects on a surface according to an embodiment;

Fig. 3 illustrates a simplified side view of a vehicle with an apparatus and a table for compensating acceleration forces of objects on a surface according to an embodiment; and

Fig. 4 illustrates a simplified flowchart of a method for compensating acceleration forces of objects on a surface according to another embodiment.

Various examples and embodiments will now be described in more detail with reference to the enclosed drawings, which illustrate some examples and embodiments. In the Figures, the thicknesses of the lines, layers and regions may be exaggerated for clarity.

In the Figures identical or similar reference signs refer to identical or similar objects, elements or processes throughout the description, which may be implemented identically or in a modified form with respect to one characteristic, some characteristics or all characteristics. Details and examples relating to one object, element or process described in the context of one embodiment or one Figure may easily be transferred to other embodiments or Figures, unless explicitly or for technical reasons implicitly excluded.

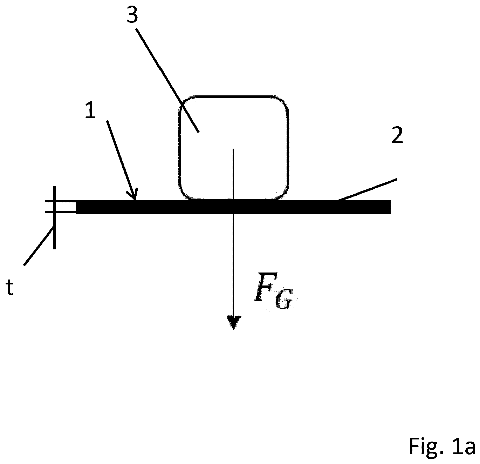

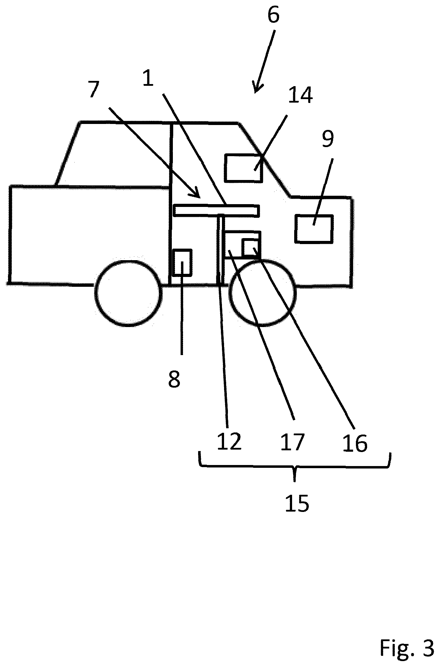

Fig. 1a to 1c show different simplified side views of a surface 1 movable by a method and an apparatus according to an embodiment. In the embodiment of Fig. 1a to 1c the surface 1 is a tabletop of a table 7 for a vehicle 6 like shown in Fig. 3 in which the table 7 with the surface 1 is arranged. In other examples the surface of course may be arranged in or on other vehicles or devices.

The surface 1 has the form of a cuboid, wherein a thickness t is the smallest dimension of the cuboid. Further, the surface 1 comprises a top 2, which is plane and is configured to carry an object 3. In different embodiments the surface may have any other form, for example circular, oval, rounded edges, rims recesses or the like. The object 3 may be any item a passenger wants to use in a vehicle and place on a table like a laptop, computer, mobile phone, wallet, container for beverage or food, bag, suitcase, key, newspaper, magazine or the like.

Fig. 1a illustrates the surface 1 while no acceleration is affecting the surface 1 (acceleration = 0). This may result from moving the surface 1 with a constant velocity, for example driving the vehicle 6 constantly which means with a constant velocity. The only force affecting the object 3 results from the mass of the object 3 and is weight force FG. The surface 1 is arranged in a horizontal position in which the weight force FG of the object 3 is perpendicular the top 2 of the surface 1. The object 3 on the surface 1, which can also be called table is not moving.

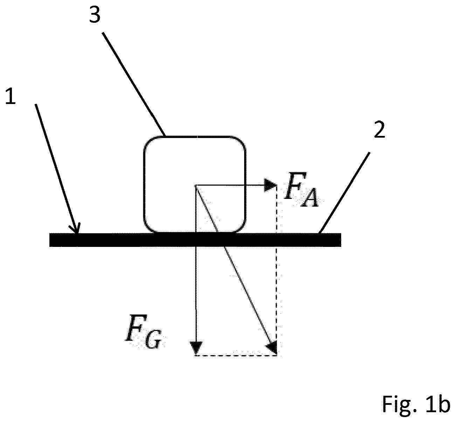

Fig. 1b illustrates a situation in which the surface 1 and the object 3 on the surface 1 are affected by acceleration (acceleration a>0). This may result from driving the vehicle 6 with a changing velocity or changing the driving direction of the vehicle 6. The acceleration results in an additional force $F_A$ affecting the object 3. The additional force $F_A$ is directed in the opposite direction of the acceleration and rectangular to the weight force FG resulting from the mass of object 3. The acceleration of the vehicle 6 would make the object 3 move and possibly fall from the surface 1 or the table 7. Fiction is neglected in this example.

This problem is solved by the method and the apparatus for compensating acceleration forces of objects on a surface according to an embodiment.

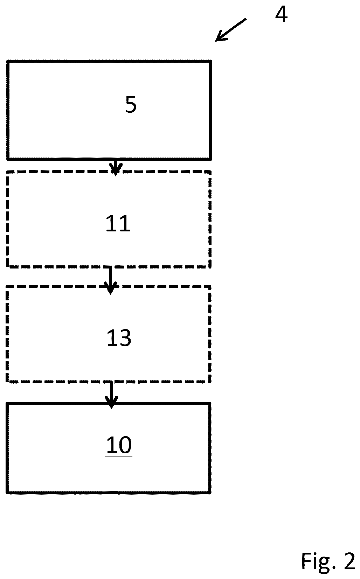

Fig. 2 shows a simplified flowchart of the method 4 for compensating acceleration forces of objects 3 on the surface 1 according to an embodiment. The method 4 comprises in a first step 5 sensing information related to an acceleration on the surface 1.

Sensing information related to the acceleration may comprise sensing information related to a direction and a magnitude of the acceleration and may be carried out in different ways. In one embodiment an acceleration sensor 8 as shown in Fig. 3 configured to provide information related to acceleration may provide the information. The acceleration sensor 8 may measure the acceleration affecting the object 3 and the surface 1. As the surface 1 and the object 3 are arranged in the vehicle 6 the acceleration affecting the surface 1 and the object 3 may be the acceleration of the vehicle 6. The acceleration sensor 8 may be part of the vehicle 6 and also provide information about acceleration for other applications of the vehicle 6, like driving assistance systems or the like.

Additionally or in other embodiments the information related to the acceleration may be received from a control device 9 of the vehicle 6. The control device 9 may be configured to provide information related to future acceleration that will affect the surface 1 and object 3 based on instructions for autonomous driving for the vehicle 6.

In a further step 10 the method 4 comprises moving the surface 1 to at least partly compensate the acceleration. In order to prevent the object 3 from falling off from the surface, the surface 1 may be moved based on the information related to the direction and the magnitude of the acceleration.

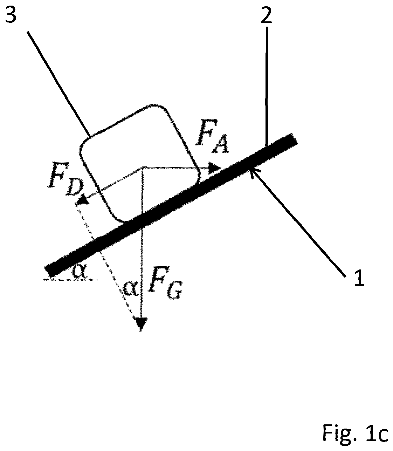

Fig. 1c illustrates the solution to the problem by applying method 4. The surface 1 is tilting. As the surface 1 is implemented as a tabletop of the table 7, the situation illustrated in Fig. 1c may also be described as the table or the tabletop is tilting.

The method 4 comprises as further step 11 determining an angle $\alpha$ by which the surface 1 is tilted along an axis by

$$\propto = \arctan(a/g),$$

wherein *a* relates to the acceleration affecting the surface 1 and *g* relates to gravitational acceleration. Step 11 may be carried out before the moving of the surface 1 in step 10.

By tilting the surface 1 a downhill force $F_D$ is created. The tilting angle $\alpha$ is calculated in that way that the downhill force $F_D$ is compensating the force created by the acceleration $F_A$ as shown in the parallelogram of forces in Fig. 1c.

Fig. 1a to 1c show only an example for one dimension. According to the direction of the acceleration affecting the surface 1 and or the object 3, the surface 1 may be tilted in at least two directions which are perpendicular to each other.

Accordingly the tilting angles $\alpha_x$ and $\alpha_y$ are calculated in that way that the downhill force $F_D$ is compensating the force created by the acceleration $F_A$.

$$\propto_x = \arctan(a_x/g) \text{ and } \propto_y = \arctan(a_y/g),$$

wherein $\alpha_x$ is the angle to compensate acceleration affecting the surface 1 from direction x and $a_y$ is the acceleration affecting the surface 1 from direction y.

The tilting may be carried out by an actuator 12 as illustrated in Fig. 3. The actuator 12 is configured to carry out the tilting. For example, the actuator 12 is implemented as any motor for example a swivelling motor, based on an electric, hydraulic and or pneumatic principle. In other embodiments in step 10 of the method 4 may also be carried out another movement than tilting, for example, a linear movement.

If the information related to the acceleration is provided from the control device 9, for example, if autonomous driving of the vehicle 6 is activated this may allow prediction of the car acceleration in the next milliseconds. This may allow preconditioning of the surface 1 and latency free control.

The method 4 may comprise in a further step 13 receiving information related to movement of the object 3 on the surface 1. The information related to movement of the object 3 on the surface 1 may be provided from a movement sensor 14 as illustrated in Fig. 3. The movement sensor 14 is configured to sense movement of at least one object 3 located on the surface 1. The movement sensor 14 may be an optical sensor, for example, comprising at least one camera and/or at least one ultrasonic sensor. Detecting slight movements of the at least one object 3 or a plurality of items on the surface 1 by the movement sensor 14 may enable a calmer control of the surface 1 or table with the surface. In some embodiments the surface 1 or table 7 only tilts if an object 3 is about to move or if a movement is or was detected. The step 13 may be carried out before moving the surface 1 in step 10.

Fig. 3 illustrates a simplified side view of the vehicle 6 with an apparatus 15 for compensating acceleration forces of objects 3 on a surface 1 according to an embodiment. The vehicle 6 may be any vehicle, for example being configured to transport passengers like a car, an auto bus or the like. In some embodiments the vehicle 6 may be configured for autonomous driving and comprise the control device 9 configured to provide instructions for autonomous driving.

The apparatus 15 for compensating acceleration forces of objects 3 on the surface 1 comprises an interface 16, which is configured to receive information related to an acceleration on the surface 1. The interface 16 may be configured to receive the information from the acceleration sensor 8 or eventually also from the control device 9. Further, the interface 16 may also be configured to receive the information from the movement sensor 14.

The apparatus 15 further comprises the at least one actuator 12 configured to control a movement of the surface 1. Additionally the apparatus 15 comprises a control circuit 17. The control circuit 17 is coupled to the interface 16 and the at least one actuator 12, wherein the control circuit 17 is configured to move the surface 1 to at least partly compensate the acceleration using the at least one actuator 12 based on the information related to the acceleration on the surface 1. The control circuit 17, the actuator 12 and/or the sensor 8 or 14 may be coupled in a way that allows receiving and/or exchanging information, preferably carried on signals.

In other embodiment the acceleration sensor 8 and/or the movement sensor 14 may be part of the surface 1, the apparatus 15 or a table 7 comprising the apparatus 15. The table 7 may also comprise the surface 1 as tabletop.

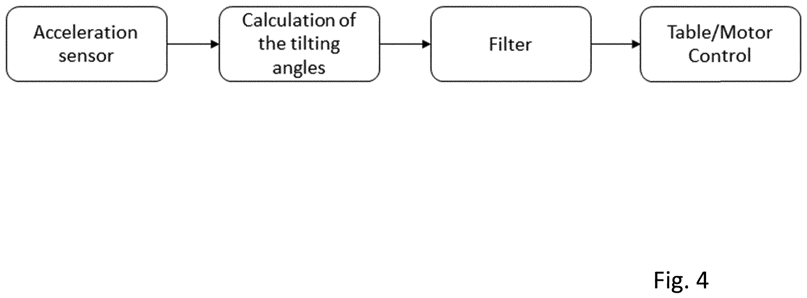

Fig. 4 illustrates a simplified flowchart of a method for compensating acceleration forces of objects on a surface according to another embodiment. As illustrated in Fig. 4 information provided from an acceleration sensor 8 is used for calculation of the tilting angles. After using a filter the table 7 and or the actuator 12 in form of a motor is controlled to tilt the surface 1 in order to prevent an object 3 located on the surface 1 from falling down the table 7. The filter may be configured to check if any movement is necessary due to friction.

Some embodiments provide a balancing table or balance table for car interior. To assure in some embodiments the biggest possible flexibility and convenience to store any kind of object, a table is proposed. To prevent items on the surface of the table from falling off the surface in case of strong accelerations, the table compensates the forces by tilting. Embodiments may provide a safe storage compartment that keeps items from moving and falling down. Further, embodiments provide a versatile solution for a large variety of different objects/items. Also is the solution convenient and easy to use, because it is an open table within reaching distance.

The aspects and features mentioned and described together with one or more of the previously detailed examples and figures, may as well be combined with one or more of the other examples in order to replace a like feature of the other example or in order to additionally introduce the feature to the other embodiments as long as it corresponds to scope of the claims.

The description and drawings merely illustrate the principles of the disclosure. It will thus be appreciated that those skilled in the art will be able to devise various arrangements that, although not explicitly described or shown herein, embody the principles of the disclosure and are included within its spirit and scope as long as it corresponds to scope of the claims.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other example examples may also include a combination of the dependent claim with the subject matter of each other dependent or independent claim. Such combinations are explicitly proposed herein as long as it corresponds to scope of the claims and unless it is stated that a specific combination is not intended. Furthermore, it is intended to include also features of a claim to any other independent claim even if this claim is not directly made dependent to the independent claim.

**Reference Numbers**

| | |
|---|---|
| 1 | surface |
| 2 | top |
| 3 | object |
| 4 | method |
| 5 | sensing |
| 6 | vehicle |
| 7 | table |
| 8 | acceleration sensor |
| 9 | control device |
| 10 | moving |
| 11 | determining |
| 12 | actuator |
| 13 | receiving |
| 14 | movement sensor |
| 15 | apparatus |

16    interface
17    control circuit

t    thickness

**Claims**

1.   A method (4) for compensating acceleration forces of objects (3) on a surface (1), comprising:

     sensing (5) information related to an acceleration on the surface (1); and
     moving (10) the surface (1) to at least partly compensate the acceleration,
     the method further comprising receiving (13) information related to movement of an object (3) on the surface
     (1) from a movement sensor (14), wherein the movement sensor (14) is configured to sense movement of at
     least one object (3) located on the surface (1).

2.   Method according to claim 1, wherein sensing (5) information related to an acceleration on the surface (1); and
     moving (10) the surface (1) to at least partly compensate the acceleration comprises sensing information related to
     a direction and a magnitude of the acceleration and moving the surface (1) based on the information related to the
     direction and the magnitude of the surface (1).

3.   Method according to claim 1 or 2, wherein moving (10) the surface (1) to at least partly compensate the acceleration
     comprises tilting the surface (1).

4.   Method according to claim 3, further comprising determining an angle $\alpha$ by which the surface (1) is tilted along an
     axis by $\alpha$ = arctan (acceleration/gravitational constant).

5.   Method according to one of the previous claims, wherein the information related to the acceleration on the surface
     (1) is received from an acceleration sensor (8) which is configured to directly or indirectly measure an acceleration
     affecting the surface (1).

6.   Method according to one of the previous claims, wherein the information related to the acceleration on the surface
     (1) is received from a control device (9) which is configured to control a vehicle (6) for autonomous driving, wherein
     the surface (1) can be arranged in the vehicle (6).

7.   Method according to claim 6, wherein the control device (9) is configured to predict the information related to the
     acceleration on the surface (1) based on autonomous driving instructions and wherein the information related to the
     acceleration on the surface (1) is related to a future acceleration that will be affecting the surface (1).

8.   Method according to claim 1, wherein moving the surface (1) to at least partly compensate the acceleration is carried
     out, based on sensing movement of the at least one object (3) located on the surface (1) by the movement sensor (14).

9.   An apparatus (15) for compensating acceleration forces of objects (3) on a surface (1), comprising

     an interface (16) configured to receive information related to an acceleration on the surface (1), wherein the
     interface (16) is configured to receive information related to movement of an object (3) on the surface (1) from
     a movement sensor (14), wherein the movement sensor (14) is configured to sense movement of at least one
     object (3) located on the surface (1);
     at least one actuator (12) configured to control a movement of the surface (1); and
     a control circuit (17) coupled to the interface (16) and the at least one actuator (12),
     wherein the control circuit (17) is configured to move the surface (1) to at least partly compensate the acceleration
     using the at least one actuator (12) based on the information related to the acceleration on the surface (1).

10.  A vehicle (6) comprising the apparatus (15) of claim 9 or comprising a table (7) comprising the apparatus (15) of
     claim 9.

**Patentansprüche**

1. Verfahren (4) zum Ausgleichen von Beschleunigungskräften von Gegenständen (3) auf einer Oberfläche (1), Folgendes umfassend:

   Erfassen (5) von Informationen in Bezug zu einer Beschleunigung auf der Oberfläche (1); und
   Bewegen (10) der Oberfläche (1), um die Beschleunigung zumindest teilweise auszugleichen, wobei das Verfahren ferner das Empfangen (13) von Informationen in Bezug zur Bewegung eines Gegenstands (3) auf der Oberfläche (1) von einem Bewegungssensor (14) umfasst, wobei der Bewegungssensor (14) dazu ausgelegt ist, die Bewegung mindestens eines sich auf der Oberfläche (1) befindenden Gegenstands (3) zu erfassen.

2. Verfahren nach Anspruch 1, wobei das Erfassen (5) von Informationen in Bezug zu einer Beschleunigung auf der Oberfläche (1); und das Bewegen (10) der Oberfläche (1), um die Beschleunigung zumindest teilweise auszugleichen, das Erfassen von Informationen in Bezug zu einer Richtung und Stärke der Beschleunigung und das Bewegen der Oberfläche (1) auf Grundlage der Informationen in Bezug zur Richtung und Stärke auf der Oberfläche (1) umfasst.

3. Verfahren nach Anspruch 1 oder 2, wobei das Bewegen (10) der Oberfläche (1), um die Beschleunigung zumindest teilweise auszugleichen, das Neigen der Oberfläche (1) umfasst.

4. Verfahren nach Anspruch 3, ferner das Bestimmen eines Winkels $\alpha$ umfassend, um den die Oberfläche (1) entlang einer Achse um $\alpha$ = Arkustangens (Beschleunigungs-/Gravitationskonstante) geneigt ist.

5. Verfahren nach einem der vorstehenden Ansprüche, wobei die Informationen in Bezug zur Beschleunigung auf der Oberfläche (1) von einem Beschleunigungssensor (8) empfangen werden, der dazu ausgelegt ist, eine sich auf die Oberfläche (1) auswirkende Beschleunigung direkt oder indirekt zu messen.

6. Verfahren nach einem der vorstehenden Ansprüche, wobei die Informationen in Bezug zur Beschleunigung auf der Oberfläche (1) von einer Steuerungsvorrichtung (9) empfangen werden, die dazu ausgelegt ist, ein Fahrzeug (6) für autonomes Fahren zu steuern, wobei die Oberfläche (1) im Fahrzeug (6) angeordnet sein kann.

7. Verfahren nach Anspruch 6, wobei die Steuerungsvorrichtung (9) dazu ausgelegt ist, die Informationen in Bezug zur Beschleunigung auf der Oberfläche (1) auf Grundlage der Anweisungen für das autonome Fahren vorherzusagen, und wobei sich die Informationen in Bezug zur Beschleunigung auf der Oberfläche (1) auf eine zukünftige, sich auf die Oberfläche (1) auswirkende Beschleunigung beziehen.

8. Verfahren nach Anspruch 1, wobei das Bewegen der Oberfläche (1), um die Beschleunigung zumindest teilweise auszugleichen, auf Grundlage des Erfassens der Bewegung des mindestens einen sich auf der Oberfläche (1) befindenden Gegenstands (3) durch den Bewegungssensor (14) ausgeführt wird.

9. Vorrichtung (15) zum Ausgleichen von Beschleunigungskräften von Gegenständen (3) auf einer Oberfläche (1), Folgendes umfassend:

   eine Schnittstelle (16), die dazu ausgelegt ist, Informationen in Bezug zu einer Beschleunigung auf der Oberfläche (1) zu empfangen, wobei die Schnittstelle (16) dazu ausgelegt ist, Informationen in Bezug zur Bewegung eines Gegenstands (3) auf der Oberfläche (1) von einem Bewegungssensor (14) zu empfangen, wobei der Bewegungssensor (14) dazu ausgelegt ist, die Bewegung mindestens eines sich auf der Oberfläche (1) befindenden Gegenstands (3) zu erfassen;
   mindestens ein Stellglied (12), das dazu ausgelegt ist, eine Bewegung der Oberfläche (1) zu steuern; und
   einen Steuerkreis (17), der mit der Schnittstelle (16) und dem mindestens einen Stellglied (12) gekoppelt ist, wobei der Steuerkreis (17) dazu ausgelegt ist, die Oberfläche (1) unter Verwendung des mindestens einen Stellglieds (12) auf Grundlage der Informationen in Bezug zur Beschleunigung auf der Oberfläche (1) zu bewegen, um die Beschleunigung zumindest teilweise auszugleichen.

10. Fahrzeug (6), die Vorrichtung (15) nach Anspruch 9 umfassend, oder einen Tisch (7) umfassend, der die Vorrichtung (15) nach Anspruch 9 umfasst.

**Revendications**

1. Procédé (4) de compensation des forces d'accélération d'objets (3) sur une surface (1), comprenant :

   la détection (5) d'informations relatives à une accélération sur la surface (1) ; et
   le déplacement (10) de la surface (1) pour compenser au moins partiellement l'accélération,
   le procédé comprenant en outre la réception (13) d'informations relatives au mouvement d'un objet (3) sur la
   surface (1) à partir d'un capteur de mouvement (14), le capteur de mouvement (14) étant configuré pour détecter
   le mouvement d'au moins un objet (3) situé sur la surface (1).

2. Procédé selon la revendication 1, la détection (5) d'informations relatives à une accélération sur la surface (1) ; et
   le déplacement (10) de la surface (1) pour compenser au moins partiellement l'accélération comprenant la détection
   d'informations relatives à une direction et à une amplitude de l'accélération et le déplacement de la surface (1) sur
   la base des informations relatives à la direction et à l'amplitude de la surface (1).

3. Procédé selon la revendication 1 ou 2, le déplacement (10) de la surface (1) pour compenser au moins partiellement
   l'accélération comprenant l'inclinaison de la surface (1).

4. Procédé selon la revendication 3, comprenant en outre la détermination d'un angle $\alpha$ selon lequel la surface (1) est
   inclinée le long d'un axe par $\alpha$ = arctan(accélération/constante gravitationnelle).

5. Procédé selon l'une des revendications précédentes, les informations relatives à l'accélération sur la surface (1)
   étant reçues d'un capteur d'accélération (8) qui est configuré pour mesurer directement ou indirectement une accélération affectant la surface (1).

6. Procédé selon l'une des revendications précédentes, les informations relatives à l'accélération sur la surface (1)
   étant reçues d'un dispositif de commande (9) qui est configuré pour commander un véhicule (6) pour une conduite
   autonome, la surface (1) pouvant être agencée dans le véhicule (6).

7. Procédé selon la revendication 6, le dispositif de commande (9) étant configuré pour prédire les informations relatives
   à l'accélération sur la surface (1) sur la base d'instructions de conduite autonome et les informations relatives à
   l'accélération sur la surface (1) étant relatives à une accélération future qui affectera la surface (1).

8. Procédé selon la revendication 1, le déplacement de la surface (1) pour compenser au moins partiellement l'accélération étant effectué, sur la base de la détection du mouvement de l'au moins un objet (3) situé sur la surface (1)
   par le capteur de mouvement (14).

9. Appareil (15) pour compenser les forces d'accélération d'objets (3) sur une surface (1), comprenant :

   une interface (16) configurée pour recevoir des informations relatives à une accélération sur la surface (1),
   l'interface (16) étant configurée pour recevoir des informations relatives au mouvement d'un objet (3) sur la
   surface (1) à partir d'un capteur de mouvement (14), le capteur de mouvement (14) étant configuré pour détecter
   le mouvement d'au moins un objet (3) situé sur la surface (1) ;
   au moins un actionneur (12) configuré pour commander un mouvement de la surface (1) ; et
   un circuit de commande (17) couplé à l'interface (16) et à l'au moins un actionneur (12),
   le circuit de commande (17) étant configuré pour déplacer la surface (1) pour compenser au moins partiellement
   l'accélération en utilisant l'au moins un actionneur (12) sur la base des informations relatives à l'accélération
   sur la surface (1).

10. Véhicule (6) comprenant l'appareil (15) selon la revendication 9, ou comprenant une table (7) comprenant l'appareil
    (15) selon la revendication 9.

Fig. 1a

Fig. 1b

Fig. 1c

4

5

11

13

10

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 29504741 U1
- WO 2010056193 A1